# EUROPEAN PATENT SPECIFICATION

(11) **EP 2 725 073 B1**
(45) Date of publication and mention of the grant of the patent: **03.08.2016**
(21) Application number: 12189636.9
(22) Date of filing: 23.10.2012
(51) Int. Cl.: C09D 5/16

(54) **Antifouling coating composition**
Fäulnisverhindernde Beschichtungszusammensetzung
Composition de revêtement antisalissure

(43) Date of publication of application: 30.04.2014
(73) Proprietor: Jotun A/S, 3202 Sandefjord (NO)
(72) Inventor: Dahling, Marit, N-3218 Sandefjord (NO); Esmurziev, Aslan, N-3214 Sandefjord (NO)
(74) Representative: Campbell, Neil Boyd

(56) References cited:
- US-A1- 2005 255 081
- US-A1- 2006 189 708

## Description

### Field of Invention

The present invention relates to antifouling coating compositions with improved storage stability, in particular, to anti-fouling coating compositions comprising silyl ester copolymers and certain carbodiimide stabilisers to ensure the stability of the compositions. The invention also relates to surfaces coated in said antifouling coating compositions.

### Background of Invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

The most successful self-polishing antifouling systems on the market today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

Silyl ester copolymers contain hydrolysable silyl groups on the polymer backbone. These hydrolysable groups are key to the surface degradation process, one of the most important factors for obtaining a successful antifouling coating. In the presence of water the silyl ester groups will hydrolyse and carboxylic acid groups are formed on the polymer backbone. This makes the polymer hydrophilic and thereby
water erodable. A certain amount of hydrolysable groups are needed to get sufficient hydrophilicity and an erodable polymer after hydrolysis.

A disadvantage of silyl ester copolymer based anti-fouling compositions is that the hydrolysis of the silyl groups may take place during storage if moisture is present. The raw materials used in paint production often contain moisture and water may be formed during the manufacture and storage of the coating formulation due to reactions between specific raw materials. If hydrolysis occurs, the resulting carboxylic acid groups formed can react with raw materials present in the coating formulation, e.g. metal ions. A reaction with bivalent metal ions present, e.g. in the form of cuprous oxide and zinc oxide, will result in the formation of cross-links between the polymer chains and an increase in the viscosity or gelling of the paint is observed. These possible reactions mean that antifouling coating compositions containing silyl ester copolymers are prone to limited shelf-life due to poor storage stability.

To improve the storage stability of antifouling coating compositions containing silyl ester copolymers in general, dehydrating agents or desiccants are used to remove or bind any moisture present in the formulation. Most commonly used are silicates, anhydrous calcium sulphate and zeolites/molecular sieves. The use of such dehydrating agents is discussed in, for example, EP 1342756. The problem with most desiccants is that the binding of water is a reversible process and some hydrolysis of the silyl ester copolymer will still occur during storage resulting in increased viscosity of the paint.

The potential stability problems are particularly prominent in the presence of a silyl ester copolymer displaying fast hydrolysis. Whilst the dehydrating agents and desiccants are adequate for providing good storage stability for compositions containing only slow hydrolysing silyl ester copolymers, such as triisopropylsilyl acrylate, their effects are generally not sufficient to prevent gelling of compositions containing fast hydrolysing silyl ester copolymers.

Other stabilisers of possible use in organosilyl (meth)acrylate polymers based coating formulations are disclosed in US 2005/0255081. These include triorgano phosphites, triorgano amines, heteroaromatic nitrogen compounds, carbodiimides and mixtures thereof. The use of anhydrides as stabilisers is disclosed in US 2005/0256235. The use of carbodiimides as stabilizers is suggested in US2006/0189708A1 amongst a long list of possible stabilizers. There is, however, no example given in which a carbodiimide is used as a stabilizer, nor an advantage suggested by the use of carbodiimides.

We have surprisingly found that a specific group of carbodiimide compounds are particularly advantageous in improving the storage stability of antifouling coating compositions containing a hydrolysable polymer, such as silyl ester copolymer. The increase in stability is markedly better than that which is achieved using conventional stabilising agents such as dehydrating agents. Furthermore, the carbodiimides employed in the present invention overcome some of the disadvantages associated with those disclosed in US 2005/0255081.

Carbodiimides have the basic structure R-N=C=N-R. The R groups attached to the carbodiimide functionality determine the nature and kinetics of the reactions taking place at this functionality. Carbodiimides can act as water and acid scavengers. In both cases, they react to form urea compounds.

It is believed that carbodiimide groups react specifically with the carboxylic acid groups formed as the result of hydrolysis of the silyl ester in storage, thereby preventing the cross-linking reaction of the carboxylic acid groups and divalent metal oxides and other reactive compounds in the paint formulation thus avoiding an increase in the viscosity of the paint. The problem of gelling is avoided as the carbodiimide reacts with free carboxylic acid groups to stop the cross-linking reaction.

The carbodiimide compounds described in US2005/0255081A1 are highly reactive compounds used as coupling reagents in organic synthesis. The compounds react fast with moisture and free carboxylic acid groups formed on the silyl ester copolymer, and the reaction proceeds quickly to form urea products. Some of these urea products are insoluble in most organic solvents. For example, 1,3-dicyclohexylcarbodiimide and 1,3-diisopropylcarbodiimide, described in US2005/0255081A1, form urea products that are known to be insoluble in most organic solvents, leading to seeding, i.e. the formation of coarse particles, in the paint formulation. Seeding can result in clogging of the nozzle during spray application of the paint formulation and coating films with a rough surface.

The present inventors have surprisingly found that the carbodiimide compounds and polycarbodiimides of the present invention not only offer an improvement in the storage stability of antifouling coating compositions over the use of dehydrating agents or desiccants alone, but also show an improvement over that which was capable using the carbodiimides of the prior art. In particular, the carbodiimides of the present invention have slower reactivity than those described in US2005/0255081A1. The reactivity of carbodiimide compounds can be expressed as the half-life, i.e. in this case the time it takes for 50% of the carbodiimide compound to react with the carboxylic acid.

The object of the present invention is therefore to provide an antifouling coating composition comprising a hydrolysable silyl ester copolymer which exhibits improved storage stability over those known in the art. Improved storage stability also gives improved predictability of the polishing rate and thereby the antifouling performance of the coating formulations. These objectives are attained through the use of carbodiimides of a particular structure as the stabiliser in an antifouling coating composition.

### Summary of Invention

Thus, viewed from one aspect the invention provides an antifouling coating composition comprising:
(A) a silyl ester copolymer;
(B) a carbodiimide of formula (II):

   R'-(-N=C=N-R-)-N=C=N-R' (II)

   wherein
   R is an optionally substituted arylene group;
   each R' are independently identical or different optionally substituted aryl groups, and
   n is an integer from 0 to 500, preferably from 0 to 50,
   wherein R and R' may be the same or different; and
(C) a biologically active agent that prevents the settlement of marine organisms on a surface, and/or prevents the growth of marine organisms on a surface and/or encourages the dislodgement of marine organisms from a surface.

Viewed from another aspect the invention provides a process for protecting an object from fouling comprising coating at least a part of said object which is subject to fouling with an anti-fouling coating composition as hereinbefore described.

Viewed from another aspect the invention provides an object coated with an anti-fouling coating composition as hereinbefore defined.

Viewed from another aspect the invention provides the use of an antifouling coating composition as hereinbefore defined to protect a surface from marine fouling.

### Detailed Description

The antifouling coating composition of the current invention comprises at least three components; a silyl ester copolymer, a carbodiimide stabiliser and an antifouling agent. Herein, the term "antifouling agent" is a biologically active agent that prevents the settlement of marine organisms on a surface, and/or prevents the growth of marine organisms on a surface and/or encourages the dislodgement of marine organisms from a surface.

### Silyl ester copolymer

The use of silyl ester copolymers in antifouling coating compositions is well known and, in its broadest embodiment, the invention covers any of these well known hydrolysable binders. Such silyl ester copolymers are well known commercial products.

In a preferred embodiment, the silyl ester copolymer of the invention comprises the residue of at least one monomer (A) of formula (I) 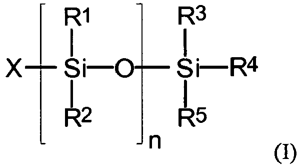 wherein
R¹ and R² are each independently selected from linear or branched C₁₋₄ alkyl groups;
R³, R⁴ and R⁵ are each independently selected from the group consisting of linear or branched C₁₋₂₀alkyl groups, C₃₋₁₂ cycloalkyl groups, optionally substituted C₆₋₂₀aryl groups and -OSi(R⁶)₃ groups;
each R⁶ is independently a linear or branched C₁₋₄alkyl groups,
n is an integer from 0 to 5;
X is an ethylenically unsaturated group, such as acryloyloxy group, methacryloyloxy group, (methacryloyloxy)alkylcarboxy group,
(acryloyloxy)alkylcarboxy group, maleinoyloxy group, fumaroyloxy group, itaconoyloxy group and citraconoyloxy group.

The term "alkyl" is intended to cover both linear or branched alkyl groups such as methyl, ethyl, propyl, and butyl. Particularly preferred cycloalkyl groups include cyclohexyl and substituted cyclohexyl.

Examples of the substituted aryl groups include aryl groups substituted with at least one substituent selected from halogens, alkyl groups having 1 to about 8 carbon atoms, acyl groups, or a nitro group. Particularly preferred aryl groups include substituted and unsubstituted phenyl, benzyl, phenalkyl or naphthyl.

In a further preferred embodiment, the silyl ester copolymer of the present invention comprises one or more monomers (A) having silyl ester functionality as defined by the general formula (I) in the amount of 1-99 % by mole of the total mixture of monomers, more preferably 15-60 % by mole, most preferably 20-40% by mole.

Ideally, preferred silyl ester monomers are based on compounds of formula (I) in which n is 0, i.e. those of formula X-SiR³R⁴R⁵.

Examples of monomers containing silyl ester functionality, e.g. as defined by the general formula (I) include:
silyl ester monomers of acrylic acid and methacrylic acid, such as triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-tert-butylsilyl (meth)acrylate, tri-sec-butylsilyl (meth)acrylate, tri-n-pentylsilyl (meth)acrylate, triisopentylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-(p-methylphenyl)silyl (meth)acrylate, tribenzylsilyl (meth)acrylate, ethyldimethylsilyl (meth)acrylate, n-propyldimethylsilyl (meth)acrylate, isopropyldimethylsilyl (meth)acrylate, n-butyldimethylsilyl (meth)acrylate, isobutyldimethylsilyl (meth)acrylate, tert-butyldimethylsilyl (meth)acrylate, n-pentyldimethylsilyl (meth)acrylate, n-hexyldimethylsilyl (meth)acrylate, neohexyldimethylsilyl (meth)acrylate, n-octyldimethylsilyl (meth)acrylate, n-decyldimethylsilyl (meth)acrylate, dodecyldimethylsilyl (meth)acrylate, n-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, p-tolyldimethylsilyl (meth)acrylate, isopropyldiethylsilyl (meth)acrylate, n-butyldiisopropylsilyl (meth)acrylate, n-octyldiisopropylsilyl (meth)acrylate, methyldi-n-butylsilyl (meth)acrylate, methyldicyclohexylsilyl (meth)acrylate, methyldiphenylsilyl (meth)acrylate, tert-butyldiphenylsilyl (meth)acrylate, nonamethyltetrasiloxy (meth)acrylate, bis(trimethylsiloxy)methylsilyl (meth)acrylate, tris(trimethylsiloxy)silyl (meth)acrylate;
silyl ester monomers of maleic acid such as triethylsilyl ethyl maleate, tri-n-propylsilyl n-propyl maleate, triisopropylsilyl methyl maleate, tri-n-butylsilyl n-butyl maleate and tri-n-hexylsilyl n-hexyl maleate;
silyl ester monomers of fumaric acid such as triethylsilyl ethyl fumarate, tri-n-propylsilyl n-propyl fumarate, triisopropylsilyl methyl fumarate, tri-n-butylsilyl n-butyl fumarate and tri-n-hexylsilyl n-hexyl fumarate;
silyl esters monomers of carboxyalkyl (meth)acrylate such as triethylsiloxycarbonylmethyl (meth)acrylate, tri-n-propylsiloxycarbonylmethyl (meth)acrylate, triisopropylsiloxycarbonylmethyl (meth)acrylate, tri-n-butylsiloxycarbonylmethyl (meth)acrylate, triisobutylsiloxycarbonylmethyl (meth)acrylate, tri-tert-butylsiloxycarbonylmethyl (meth)acrylate, tri-sec-butylsiloxycarbonylmethyl (meth)acrylate, tri-n-pentylsiloxycarbonylmethyl (meth)acrylate, triisopentylsiloxycarbonylmethyl (meth)acrylate, tri-n-hexylsiloxycarbonylmethyl (meth)acrylate, tri-n-octylsiloxycarbonylmethyl (meth)acrylate, tri-n-dodecylsiloxycarbonylmethyl (meth)acrylate, triphenylsiloxycarbonylmethyl (meth)acrylate, tri-(p-methylphenyl)siloxycarbonylmethyl (meth)acrylate, tribenzylsiloxycarbonylmethyl (meth)acrylate, ethyldimethylsiloxycarbonylmethyl (meth)acrylate, n-propyldimethylsiloxycarbonylmethyl (meth)acrylate, isopropyldimethylsiloxycarbonylmethyl (meth)acrylate, n-butyldimethylsiloxycarbonylmethyl (meth)acrylate, isobutyldimethylsiloxycarbonylmethyl (meth)acrylate, tert-butyldimethylsiloxycarbonylmethyl (meth)acrylate, n-pentyldimethylsiloxycarbonylmethyl (meth)acrylate, n-hexyldimethylsiloxycarbonylmethyl (meth)acrylate, neohexyldimethylsiloxycarbonylmethyl (meth)acrylate, n-octyldimethylsiloxycarbonylmethyl (meth)acrylate, n-decyldimethylsiloxycarbonylmethyl (meth)acrylate, dodecyldimethylsiloxycarbonylmethyl (meth)acrylate, n-octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, p-tolyldimethylsiloxycarbonylmethyl (meth)acrylate, isopropyldiethylsiloxycarbonylmethyl (meth)acrylate, n-butyldiisopropylsiloxycarbonylmethyl (meth)acrylate, n-octyldiisopropylsiloxycarbonylmethyl (meth)acrylate, methyldi-n-butylsiloxycarbonylmethyl (meth)acrylate, methyldicyclohexylsiloxycarbonylmethyl (meth)acrylate, methyldiphenylsiloxycarbonylmethyl (meth)acrylate, tert-butyldiphenylsiloxycarbonylmethyl (meth)acrylate; and others as described in WO03/080747.

The polymerizable monomers other than monomers A are monomers copolymerizable with monomers A. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, methyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert-*butylamino)ethyl (meth)acrylate and lactone modified hydroxyalkyl (meth)acrylates such as caprolactone acrylate and others as described in WO 2009/149919;

Other examples of the polymerizable monomers include esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
vinyl esters such as vinyl acetate, vinyl propionate, vinyl butyrate, vinyl pivalate, vinyl dodecanoate, vinyl benzoate, vinyl 4-*tert*-butylbenzoate, VeoVa™ 9, VeoVa™ 10;
(meth)acrylamide, *N-*propyl (meth)acrylamide, *N-*isopropyl (meth)acrylamide, *N-tert-*butyl (meth)acrylamide, *N*-phenyl (meth)acrylamide, *N-*methylol (meth)acrylamide, *N-*(isobutoxymethyl) (meth)acrylamide, *N-*[3-(dimethylamino)propyl] (meth)acrylamide, diacetone (meth)acrylamide, *N*,*N-*dimethyl (meth)acrylamide;
metal salts of acrylic acid and methacrylic acid and other metal functional monomers, e.g. as described in EP 1 323 745, (meth)acrylonitrile, (2-acetoacetoxy)ethyl (meth)acrylate and other monomers as described in WO 96/41842 and US 4 593 055;
maleimide and N-substituted maleimides such as maleimide, N-phenyl maleimide and others as described in WO 96/41841;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and *p*-chlorostyrene.

In producing the polymer containing organosilyl ester groups, the proportion of at least one of monomers A represented by formula (I) to at least one polymerizable monomer other than monomers A can be suitably determined according to the use of the coating composition. In general, however, the proportion of at least one of monomers A is preferably from 1 to 99% by mole and that of at least one other monomer is preferably from 99 to 1% by mole, preferably 15-60 % by mole, more preferably 20-40 % by mole of the total mixture of comonomers

The polymer containing organosilyl ester groups can be obtained by polymerizing such a monomer mixture in the presence of a polymerization catalyst by any of various methods such as solution polymerization, bulk polymerization, emulsion polymerization, and suspension polymerization in an ordinary way. In preparing a coating composition using this polymer containing organosilyl ester groups, the polymer is preferably diluted with an organic solvent to give a polymer solution having an appropriate viscosity. From this standpoint, it is desirable to employ solution polymerization or bulk polymerization.

Examples of the polymerization initiators include azo compounds such as azo compounds such as 2,2'-azobis(2-methylbutyronitrile), 2,2'-azobis(isobutyronitrile) and 1,1'-azobis(cyanocyclohexane) and peroxides such as *tert*-butyl peroxypivalate, *tert-*butyl peroxy-2-ethylhexanoate, *tert*-butyl peroxydiethylacetate, *tert-*butyl peroxyisobutyrate, di-*tert*-butyl peroxide, *tert*-butyl peroxybenozate, and *tert*-butyl peroxyisopropylcarbonate, *tert-*amyl peroxypivalate, *tert*-amyl peroxy-2-ethylhexanoate, 1,1-di(*tert*-amyl peroxy)cyclohexane and dibenzoyl peroxide. These compounds are used alone or as a mixture of two or more thereof.

Examples of the organic solvent include aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

The thus-obtained polymer containing organosilyl ester groups desirably has a weight-average molecular weight of from 1,000 to 100,000. The solution of the polymer desirably has a viscosity of 50 P or lower, preferably 20 P or lower at 25°C. For attaining such a viscosity, the polymer solution is desirably regulated so as to have a solid content of from 5 to 90% by weight, preferably from 15 to 85% by weight, more preferably from 40 to 75% by weight.

### Carbodiimide

A carbodiimide compound is one containing a functional group represented by the formula [-N=C=N-] in the molecule. The carbodiimide stabiliser compound of the invention must contain an aryl group in the carbodiimide backbone, especially a substituted aryl compound in the backbone of the molecule.

The carbodiimide of the invention has general formula (II):

R'(̵N=C=N-R-ₙ)̵N=C=N-R' (II)

wherein
R is an optionally substituted arylene group;
each R' are independently identical or different optionally substituted aryl groups, and n is an integer from 0 to 500, preferably from 0 to 50.
R and R' may be the same or different.

In a preferred embodiment, the carbodiimide of the invention is a monocarbodiimide (monomeric carbodiimide). The compounds concerned have the formula (II) where n=0, i.e.

R'-N=C=N-R'

R' is an optionally substituted aryl group. Preferably R' is an optionally substituted C₆₋₁₀aryl, such as C₆₋₁₀aryl substituted with one or more of a halogen, alkyl group having 1 to 8 carbon atoms or a C₃₋₈-cycloalkyl group. Branched alkyl or cycloalkyl radicals having 3 or more carbon atoms, e.g. 3 to 8 carbon atoms such as isopropyl groups, are especially preferred substituents.

In a further alternative embodiment, the carbodiimide is polymeric. The compounds concerned have the formula (II) where n ≥ 1. There may be 1 to 500, preferably from 2 to 50, repeating units in the molecule.

In a further alternative embodiment, the carbodiimide is polymeric and comprises repeating unit of formula (III):

-(-N=C=N-R)q- (III)

wherein. R is as previously defined; and
q is ≥ 2.

There may be 2 to 500, preferably from 2 to 50, repeating units in the molecule.

It is preferred if the carbodiimides of the invention are substituted. It is more preferred if both R' groups are substituted or all R groups are substituted. It is even more preferred if each R or R' group carries two or more substituents.

Aryl or arylene groups R and R' are preferably phenyl or naphthyl, especially phenyl (or phenylene). Examples of the substituents on said aryl or arylene groups include at least one substituent selected from halogens, alkyl groups having 1 to 8 carbon atoms and C₃₋₈-cycloalkyl groups. Branched alkyl or cycloalkyl radicals having 3 or more carbon atoms, e.g. 3 to 8 carbon atoms are especially preferred, such as isopropyl groups. The term branched substituent is used herein to refer to branched alkyl groups or any C₃₋₈ cycloalkyl group which we regard as inherently non linear and hence branched. It has been found that the presence of multiple substituents and/or branched substituents increases the half life of the carbodiimide as described below in the examples. This makes the compounds more attractive for use in the invention.

There may be 1 to 6 such substituents, preferably 1 to 3 such substituents, most especially 2 to 4 or 2 to 3 such groups. Particularly preferred substituted aryl or arylene groups for R and R¹ include methylphenyl(ene), or phenyl(ene) substituted with two or more C₂₋₆alkyl groups.

Substituents are preferably not on adjacent carbon atoms. Patterns of interest include 1,3-, 2,6- or 1,3,5-substitution if R and/or R' is phenyl(ene).

In one embodiment, it is preferred if substituents are *ortho* to the carbodiimide functionality. One *ortho* position may be substituted, preferably both *ortho* positions are substituted.

It will be appreciated that the carbodiimide group should bind to the named group in the formula definition (e.g. the aryl ring or cycloalkyl ring) as opposed to a substituent on that group.

The term "alkyl" is intended to cover both linear or branched alkyl groups. Preferred alkyl groups have 1 to 8 carbon atoms such as methyl, ethyl, propyl, isopropyl and butyl. Cycloalkyl groups are preferably C₃₋₈-cycloalkyl groups such as cyclopentyl or cyclohexyl.

It is preferred if both R' groups in the molecule are the same. Molecules are preferably symmetrical. The most preferred substituents are C₁₋₆ alkyl groups, e.g. methyl or isopropyl.

Examples of a monocarbodiimide compounds include: 1,3-di-o-methylphenylcarbodiimide, 1,3-diphenylcarbodiimide and bis(2,6-diisopropylphenyl)carbodiimide. The most preferred monocarbodiimide is bis(2,6-diisopropylphenyl)carbodiimide. In one embodiment, the invention does not cover the use of 1,3-di-*p*-tolylcarbodiimide.

Examples of commercially available monocarbodiimides which may be used in the present invention are Additin RC 8500, Stabaxol I and Stabaxol I LF from Rhein Chemie Rheinau GmbH and Stabilisator 7000 and Stabilisator 7000 F from Rasching GmbH.

In an alternative embodiment of the present invention utilizes a polymeric carbodiimide [i.e. having n ≥ 1 in formula (II)]. Again, these carbodiimides must contain an aryl ring.

Examples of polymeric carbodiimide compounds include tetramethylxylenecarbodiimide (degree of polymerization=2 to 20), N,N-dimethylphenylcarbodiimide (degree of polymerization=2 to 20), N,N'-di-2,6-diisopropylphenylenecarbodiimide (degree of polymerization=2 to 20) and 1,3,5-triisopropylphenylene-2,4-carbodiimide (degree of polymerisation = 2 to 20).

Examples of commercially available polymeric carbodiimides which can be used for the present invention are Stabaxol P, Stabaxol P100 and Stabaxol P200 from Rhein Chemie Rheinau GmbH and Stabilisator 9000 from Rasching GmbH.

Alternatively, a mixture of two or more carbodiimides of any of the types listed may be employed. When a mixture of carbodiimides is used, the carbodiimides used may be selected from the group consisting of monomeric or polymeric carbodiimides.

The carbodiimides of the current invention may be prepared by any known art transformation.

The carbodiimide compound preferably has relatively slow reactivity. Reactivity is measured by way of the half-life of the carbodiimide, which is defined as the time taken for 50% of the carbodiimide compound to react with a carboxylic acid. The carbodiimide compounds of the invention preferably have a half life of 10 hours or more, more preferably 20 hours or more, especially 25 hours or more in the reaction with acetic acid in xylene at 23±2°C.

The carbodiimide compounds may be used in amounts of in each case between 0.001% by weight and 10% by weight, preferably 0.01% by weight and 5% by weight, more preferably 0.01% by weight and 2% by weight, even more preferably between 0.1 % and 2% by weight and yet even more preferably between 0.2% and 1 % by weight, all based on the antifouling coating composition.

The carbodiimide or mixture of carbodiimides may be used as the sole stabiliser in the antifouling coating composition of the invention. Alternatively, the carbodiimide or mixture of carbodiimides is used in combination with a further stabilising agent. Any known agent suitable for increasing the stability of an antifouling coating composition may be used, however, dehydrating agents and desiccants are particularly preferred.

Dehydrating agents and desiccants contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and desiccants that may be used in the antifouling coating compositions according to the present invention include organic and inorganic compounds. Examples of dehydrating agents and drying agents include calcium sulphate hemihydrate, anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri*-tert-*butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds.

The carbodiimide or mixture of carbodiimides may be added to the antifouling coating composition at any stage during the production process. If components containing carboxylic acid groups are present in the antifouling coating composition it is preferred to add the carbodiimide or mixture of carbodiimides or parts of the carbodiimide or mixture of carbodiimides after the grinding process. The grinding process is known in the art as a stage in the preparation of antifouling coating compositions by batch processes, wherein high shear forces are applied to break agglomerates so as to obtain a desired particle size.

### Antifouling agent

The antifouling coating composition of the invention preferably contains at least one compound capable of preventing fouling on an object, i.e. an antifouling agent such as a biologically active agent especially a biocide.

By biologically active agent/compound is meant any chemical compound that prevents the settlement of marine organisms on a surface, and/or prevents the growth of marine organisms on a surface and/or encourages the dislodgement of marine organisms from a surface. Examples of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate), zinc ethylenebis(dithiocarbamate), manganese ethylenebis(dithiocarbamate) and manganese ethylene bis(dithiocarbamate) complexed with zinc salt.

Examples of organic biologically active compounds include heterocyclic compounds such as 2-(*tert*-butylamino)-4-(cyclopropylamino)-6-(methylthio)-1,3,5-triazine, 4,5-dichloro-2-*n*-octyl-4-isothiazolin-3-one, 1,2-benzisothiazolin-3-one, 2-(thiocyanatomethylthio)-1,3-benzothiazole and 2,3,5,6-tetrachloro-4-(methylsulphonyl)pyridine; urea derivatives such as 3-(3,4-dichlorophenyl)-1,1-dimethylurea; amides and imides of carboxylic acids, sulphonic acids and sulphenic acids such as *N*-(dichlorofluoromethylthio)phthalimide, *N*-dichlorofluoromethylthio-*N*',*N*'-dimethyl-*N*-phenylsulfamide, *N*-dichlorofluoromethylthio-*N*',*N*'-dimethyl-*N*-*p-*tolylsulfamide and *N*-(2,4,6-trichlorophenyl)maleimide; other organic compounds such as pyridine triphenylborane, amine triphenylborane, 3-iodo-2-propynyl N-butylcarbamate, 2,4,5,6-tetrachloroisophthalonitrile and p-((diiodomethyl)sulphonyl)toluene and 4-bromo-2-(4-chlorophenyl)-5-(trifluoromethyl)-1 H-pyrrole-3-carbonitrile.

Other examples of biologically active agents may be tetraalkylphosphonium halogenides, guanidine derivatives, imidazole containing compounds such as medetomidine and derivatives, macrocyclic lactones including avermectins and derivatives thereof such as ivermectine and spinosyns and derivatives thereof such as spinosad, and enzymes such as oxidase, proteolytically, hemicellulolytically, cellulolytically, lipolytically and amylolytically active enzymes.

Optionally the biologically active compounds may be encapsulated or adsorbed on an inert carrier or bonded to other materials for controlled release.

The biologically active compounds may be used alone or in mixtures. The use of these biologically active agents is known in antifouling coatings and their use would be familiar to the skilled man.

The total amount of biologically active agent in the antifouling compositions of the invention may be in the range 0.5 to 80 wt%, such as 1 to 70 wt%. It will be appreciated that the amount of this component will vary depending on the end use and the biologically active compound used.

### Composition

In addition to the silyl ester copolymer, carbodiimide and antifouling agent, the antifouling coating composition according to the present invention may optionally further comprise one or more components selected among other binders, inorganic or organic pigments, extenders and fillers, additives, solvents and thinners. An additional binder can be used to adjust the properties of the antifouling coating film. Examples of binders that can be used in addition to the silyl esters of the invention include
rosin materials such as wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(*N*-vinyl pyrrolidone) copolymers and other copolymers as described in EP 0 526 441;
(meth)acrylic polymers and copolymers, such as poly(*n*-butyl acrylate), poly(*n-*butyl acrylate-*co*-isobutyl vinyl ether);
vinyl ether polymers and copolymers, such as poly(methyl vinyl ether), poly(ethyl vinyl ether), poly(isobutyl vinyl ether), poly(vinyl chloride-*co*-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625;
alkyd resins and modified alkyd resins; and
other condensation polymers as described in WO 96/14362.

Examples of pigments are inorganic pigments such as titanium dioxide, iron oxides, zinc oxide and zinc phosphate; organic pigments such as phthalocyanine compounds, azo pigments and carbon black.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, preferably 0.75 to 15 wt% of the antifouling composition. It will be appreciated that the amount of these optional components will vary depending on the end use.

It is highly preferred if the antifouling composition contains a solvent. This solvent is preferably volatile and is preferably organic. Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, *tert*-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention should preferably have solids content above 40 vol%, e.g. above 45 % by volume, such as above 50 vol%, preferably above 55 vol%.

More preferably the antifouling coating composition should have a content of volatile organic compounds (VOC) below 500 g/L, preferably below 400 g/L, e.g. below 390 g/L. VOC content can be calculated (ASTM D5201-01) or measured, preferably measured.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples.

### Examples

### General procedure for preparation of anti-fouling coating compositions

The components were mixed in the proportions given in Table 2 together with the stabilisers given in Table 3-4. The mixture were dispersed in the presence of glass beads (approx. 2mm in diameter) in a paint can of 500 ml using a vibrational shaker for 30 minutes. The glass beads were filtered of before testing.

### Accelerated storage stability testing (ASTM D1849-95)

Each coating composition were filled in 250 ml paint can and sealed off. The cans were stored at 52°C. At regular intervals the cans were taken out and the viscosity of the coating composition were measured using a Cone and Plate viscometer and a Stormer viscometer.

### Determination of paint viscosity using Cone and Plate viscometer (ASTM D4287-00)

The viscosity was measured using a digital Cone and Plate viscometer set at a temperature of 23°C.

### Determination of paint viscosity using Stormer viscometer (ASTM D562-10 Method B)

The samples were brought to ambient temperature before measurement. The viscosity was measured using a digital Krebs viscometer.

The following silyl ester copolymers A and B were prepared:

**Table 1: Silyl ester copolymer solutions**

| | | **A** | **B** |
|---|---|---|---|
| Monomer composition (wt%) | Tri(n-butyl)silyl methacrylate | 46.5 | - |
| | Bis(trimethylsiloxy)methylsilyl methacrylate | - | 48.0 |
| | n-Butyl acrylate | 10.0 | 12.0 |
| | 2-Methoxyethyl acrylate | - | 4.0 |
| | Methyl methacrylate | 43.5 | 36.0 |
| Solvent (wt%) | Xylene | 100 | 100 |
| Polymer solution properties | Solids content (wt%) | 50 | 50 |
| | Brookfield viscosity at 23°C (cP) | 510 | 230 |
| | Specific gravity (g/ml) | 0.95 | 0.96 |
| Polymer properties | Mw (kDa) | 47 | 42 |
| | PDI | 2.6 | 2.5 |
| | Tg (°C) | 37 | 35 |

Silyl ester copolymers A and B were used to prepare the following paint formulations:

**Table 2: Antifouling coating formulations**

| **Components (in part by weight)** | | **Formulation 1** | **Formulation 2** |
|---|---|---|---|
| Binders | Silyl ester copolymer A (50% in xylene) | 32.2 | - |
| | Silyl ester copolymer B (50% in xylene) | - | 32.9 |
| | Cuprous oxide | 35.0 | 35.0 |
| | Copper pyrithione | 2.0 | 2.0 |
| | Iron oxide red | 2.0 | 2.0 |
| | Talc | 6.0 | 6.0 |
| | Zinc oxide | 2.0 | 2.0 |
| | Zinc phosphate | 6.0 | 6.0 |
| Thixotropic agents | Disparlon A603-20X | 2.5 | 2.5 |
| | Disparlon 4401-25X | 1.0 | 1.0 |
| Solvents | Xylene | 11.3 | 10.6 |

**Table 3:**

| | | **Examples** | | | | | **Comparative examples** | | |
|---|---|---|---|---|---|---|---|---|---|
| **Components (in part by weight)** | | **1-1** | **1-2** | **1-3** | **1-4** | **1-5** | **C1-1** | **C1-2** | **C1-3** |
| Coating composition from Table 1 | Formulation 1 | 100.0 | 100.0 | 100.0 | 100.0 | 100.0 | 100.0 | 100.0 | 100.0 |
| Carbodiimide compounds | Bis(2,6-diisopropylphenyl) carbodiimide (1) | 1.0 | 1.0 | - | - | - | - | - | - |
| | Poly(1,3,5-triisopropyl-phenylene-2,4-carbodiimide)⁽²⁾ | - | - | 1.0 | 2.0 | 1.0 | - | - | - |
| | 1,3-Dicyclohexylcarbodiimide | - | - | - | - | - | 1.0 | - | - |
| Dehydrating agents and desiccants | Calcium sulphate, anhydrous | - | 1.0 | - | - | - | - | 1.0 | - |
| | Sylosive A4 | - | - | - | - | 1.0 | - | - | - |
| | Tetraethoxysilane | - | - | - | - | - | - | - | 1.0 |
| Cone and Plate viscosity | Initial viscosity (cP) | 174 | 231 | 249 | 246 | 273 | 210 | 264 | 177 |
| | After 8 weeks at 52°C (cP) | 355 | 288 | 660 | 711 | 422 | gel after 2 weeks | gel after 2 weeks | >1000 |
| Stormer viscosity | Initial viscosity (KU) | 85 | 87 | 86 | 88 | 91 | 85 | 90 | 85 |
| | After 8 weeks at 52°C (KU) | 92 | 87 | 106 | 107 | 92 | gel | gel | 145 |

| | | | | | | | | | |
|---|---|---|---|---|---|---|---|---|---|
| (1) Stabaxol I LF by Rhein Chemie (2) Stabaxol P by Rhein Chemie | | | | | | | | | |

**Table 4:**

| | | **Examples** | | | **Comparative examples** | | | |
|---|---|---|---|---|---|---|---|---|
| **Components (in part by weight)** | | **2-1** | **2-2** | **2-3** | **C2-1** | **C2-2** | **C2-3** | **C2-4** |
| Coating composition from Table 1 | Formulation 2 | 100.0 | 100.0 | 100.0 | 100.0 | 100.0 | 100.0 | 100.0 |
| Carbodiimide compounds | Bis(2,6-diisopropylphenyl) carbodiimide ⁽³⁾ | 1.0 | 1.0 | - | - | - | - | - |
| | Poly(1,3,5-triisopropyl-phenylene-2,4-carbodiimide) ⁽⁴⁾ | - | - | 1.0 | - | - | - | - |
| | 1,3-Dicyclohexylcarbodiimide | - | - | - | 1.0 | 1.0 | - | - |
| Dehydrating agents and desiccants | Sylosive A4 | - | 1.0 | 1.0 | - | 1.0 | 1.0 | - |
| | Tetraethoxysilane | - | - | - | - | - | - | 1.0 |
| Cone and Plate viscosity | Initial viscosity (cP) | 188 | 169 | 172 | 150 | 171 | 174 | 157 |
| | After 6 weeks at 52°C (cP) | 477 | 273 | 681 | gel after 2 weeks | gel | gel | gel after 4 weeks |

| | | | | | | | | |
|---|---|---|---|---|---|---|---|---|
| (3) Stabaxol I LF by Rhein Chemie (4) Stabaxol P by Rhein Chemie | | | | | | | | |

### Determination of carbodiimide half-life by IR spectroscopy

Solutions of the carbodiimide compounds and acetic acid in xylene are prepared. A carbodiimide solution and the acetic acid solution are mixed and the reaction between the carbodiimide compound and acetic acid at 23±2°C is monitored by following the carbodiimide absorption at 2100-2200 cm⁻¹ in an zinc selenide cell. The reaction is followed until approximately 50% of the carbodiimide compound has reacted. The measured half-life of carbodiimide compounds are given in Table 5.

**Table 5**

| **Carbodiimide compound** | **Half-life (h)** | **Remarks** |
|---|---|---|
| 1,3-Dicyclohexylcarbodiimide | 0.25 | Precipitation of urea products |
| 1,3-Diisopropylcarbodiimide | 0.75 | Precipitation of urea products |
| 1,3-Di-p-tolylcarbodiimide | 2 | |
| 1,3-Di-o-methylphenylcarbodiimide | 3 | |
| Bis(2,6-diisopropylphenyl) carbodiimide ⁽⁵⁾ | 30 | |
| Poly(1,3,5-triisopropyl-phenylene-2,4-carbodiimide) ⁽⁶⁾ | 72 | |
| 1,3-bis(trimethylsilyl)carbodiimide | - | No reaction |

| | | |
|---|---|---|
| (5) Stabaxol I LF by Rhein Chemie (6) Stabaxol P by Rhein Chemie | | |

### Discussion

The results in table 3 and table 4 shows significantly improved storage stability for coating formulations stabilised with carbodiimide compounds of the present invention compared to the comparative example coating formulations using carbodiimide compound as described in US2005//0255081A1 or common dehydrating agents alone. A further improvement of the storage stability is observed by combining the carbodiimide compounds of the present invention with dehydrating agent.

The results in table 5 shows significantly longer half-life of the carbodiimide of the present invention compared to the carbodiimide compound as described in US2005//0255081A1.

There appears to be a positive correlation between half-life and storage stability.

## Claims

1. An antifouling coating composition comprising:
(A) a silyl ester copolymer;
(B) a carbodiimide of formula (II): 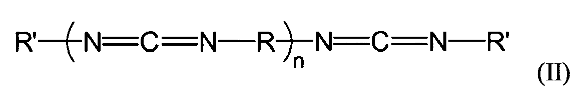 wherein
R is an optionally substituted arylene group;
each R' are independently identical or different optionally substituted aryl groups, and
n is an integer from 0 to 500, preferably from 0 to 50; and
(C) a biologically active agent that prevents the settlement of marine organisms on a surface, and/or prevents the growth of marine organisms on a surface and/or encourages the dislodgement of marine organisms from a surface.

2. An antifouling coating composition as claimed in claim 1, wherein said silyl ester copolymer comprises at least one monomer (A) of formula (I): 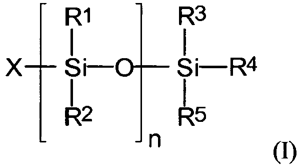 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, C₆₋₂₀ aryl groups and -OSi(R⁶)₃ groups;
each R⁶ is a linear or branched C₁₋₄ alkyl group,
n is an integer from 0 to 5;
X is an ethylenically unsaturated group, preferably an acryloyloxy group, methacryloyloxy group, (methacryloyloxy)alkylcarboxy group, (acryloyloxy)alkylcarboxy group, maleinoyloxy group, fumaroyloxy group, itaconoyloxy group or citraconoyloxy group.

3. An antifouling coating composition according to any preceding claim, wherein the silyl ester monomers are compounds of formula (I) in which n=0.

4. An antifouling coating composition according to claim 1 to 3, wherein each R' is a substituted C₆₋₁₀aryl, substituted with one or more of a halogen, an alkyl group having 1 to 8 carbon atoms or a C₃₋₈-cycloalkyl group.

5. An antifouling coating composition according to claim 1 to 4 wherein R is a substituted C₆₋₁₀arylene, substituted with one or more of a halogen, an alkyl group having 1 to 8 carbon atoms or a C₃₋₈-cycloalkyl group.

6. An antifouling coating composition according to any of claims 1 to 5, wherein some or all of the substituents are branched substituents.

7. An antifouling coating composition according to any of claims 1 to 6, wherein R and/or one or both of R' carries two or more substituents, e.g. two branched substituents.

8. An antifouling coating composition according to any of claims 1 to 7, wherein R and/or one or both of R' is substituted phenyl.

9. An antifouling coating composition according to any of claims 1 to 8, wherein R and/or one or both of R' is *ortho* substituted.

10. An antifouling coating composition according to any preceding claim, wherein the carbodiimide is present in an amount of 0.001 wt% to 10 wt%, preferably 0.2 wt% to 1 wt %.

11. An antifouling coating composition according to any preceding claim, wherein the carbodiimide has a half-life of 10 hours or more, preferably 20 hours or more, more preferably 25 hours or more measured as described in the Examples.

12. An antifouling coating composition according to any preceding claim, further comprising a dehydrating agent or a desiccant.

13. An antifouling coating composition according to any preceding claim wherein said antifouling agent is a compound that prevents the settlement of marine organisms on a surface, and/or prevents the growth of marine organisms on a surface and/or encourages the dislodgement of marine organisms from a surface, preferably present in an amount of 0.5 to 80 wt%, such as 1 to 70 wt%.

14. A process for protecting an object from fouling comprising coating at least a part of said object which is subject to fouling with an anti-fouling coating composition as claimed in any of claims 1 to 13.

15. An object coated with the antifouling coating composition as claimed in any of claims 1 to 13.

## Patentansprüche

1. Eine anwuchsverhindernde Beschichtungszusammensetzung umfassend:
(A) ein Silyl-Ester Co-Polymer;
(B) ein Carbodiimid der Formel (II): 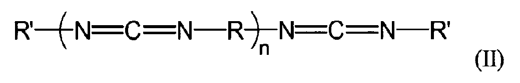 worin
R eine optional substituierte Arylen-Gruppe ist;
jedes R' eine unabhängige identische oder unterschiedliche substituierte Aryl-Gruppe ist; und
n eine Ganzzahl von 0 bis 500, vorzugsweise von 0 bis 50 ist; und
(C) ein biologischer Wirkstoff ist, der die Ansiedlung von Meeresorganismen auf einer Oberfläche verhindert, und/oder das Wachstum von Meeresorganismen auf einer Oberfläche verhindert und/oder die Entfernung von Meeresorganismen von einer Oberfläche fördert.

2. Eine anwuchsverhindernde Beschichtungszusammensetzung gemäß Anspruch 1, worin das besagte Silyl-Ester Co-Polymer mindestens ein Monomer (A) der Formel (I) umfasst: 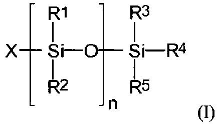 worin:
R¹ und R² beide unabhängig aus linearen oder verzweigten C₁₋₄ Alkyl-Gruppen ausgewählt sind;
R³, R⁴ und R⁵ jeder unabhängig aus einer Gruppe ausgewählt sind,
die aus linearen oder verzweigten C₁₋₂₀ Alkyl-Gruppen, C₃₋₁₂ Cycloalkyl-Gruppen, C₆₋₂₀ Aryl-Gruppen und -OSi(R⁶)₃-Gruppen bestehen;
jedes R⁶ eine lineare oder verzweigte C₁₋₄ Alkyl-Gruppe ist;
n eine Ganzzahl von 0 bis 5 ist;
X eine ethylenisch ungesättigte Gruppe ist, vorzugsweise eine Acryloyloxygruppe, eine Methacryloyloxygruppe, eine (Methacryloyloxy)Alkylcarboxygruppe, eine (Acryloyloxy) Alkylcarboxygruppe, eine Maleinoyloxygruppe, eine Fumaroyloxygruppe, eine Itaconoyloxygruppe oder eine Citraconoyloxygruppe ist.

3. Eine anwuchsverhindernde Beschichtungszusammensetzung gemäß einem der vorstehenden Ansprüche, worin die Silylester-Monomere Verbindungen der Formel (I) mit n=0 sind.

4. Eine anwuchsverhindernde Beschichtungszusammensetzung gemäß einem der Ansprüche 1 bis 3, worin jedes R' ein substituiertes C₆₋₁₀Aryl ist, substituiert mit einem oder mehreren Halogenen, einer Alkylgruppe mit 1 bis 8 Kohlenstoffatomen oder einer C₃₋₈-Cycloalkylgruppe.

5. Eine anwuchsverhindernde Beschichtungszusammensetzung gemäß einem der Ansprüche 1 bis 4, worin R ein substituiertes C₆₋₁₀arylen ist, substituiert mit einem oder mehreren Halogenen, einer Alkylgruppe mit 1 bis 8 Kohlenstoffatomen oder einer C₃₋₈-Cycloalkylgruppe.

6. Eine anwuchsverhindernde Beschichtungszusammensetzung gemäß einem der Ansprüche 1 bis 5, worin einige oder alle Substituenten verzweigte Substituenten sind.

7. Eine anwuchsverhindernde Beschichtungszusammensetzung gemäß einem der Ansprüche 1 bis 6, worin R und/oder ein oder beide R' zwei oder mehr Substituenten tragen, beispielsweise zwei verzweigte Substituenten.

8. Eine anwuchsverhindernde Beschichtungszusammensetzung gemäß einem der Ansprüche 1 bis 7, worin R und/oder ein oder beide R' ein substituiertes Phenyl sind.

9. Eine anwuchsverhindernde Beschichtungszusammensetzung gemäß einem der Ansprüche 1 bis 8, worin R und/oder ein oder beide R' *ortho*-substituiert sind.

10. Eine anwuchsverhindernde Beschichtungszusammensetzung gemäß einem der vorstehenden Ansprüche, worin das Carbodiimide in einer Menge vorhanden ist, die von 0,001 Gewichtsprozent bis 10 Gewichtsprozent, vorzugsweise von 0,2 bis 1 Gewichtsprozent reicht.

11. Eine anwuchsverhindernde Beschichtungszusammensetzung gemäß einem der vorstehenden Ansprüche, worin das Carbodiimide eine Halbwertszeit von 10 Stunden und mehr besitzt, vorzugsweise 20 Stunden und mehr, am meisten bevorzugt 25 Stunden oder mehr, wie in den Beispielen beschrieben gemessen.

12. Eine anwuchsverhindernde Beschichtungszusammensetzung gemäß einem der vorstehenden Ansprüche, die darüber hinaus ein entwässerndes Mittel oder ein Trockenmittel umfasst.

13. Eine anwuchsverhindernde Beschichtungszusammensetzung gemäß einem der vorstehenden Ansprüche, worin das besagte anwuchsverhindernde Mittel eine Verbindung ist, welche die Ansiedlung von Meeresorganismen auf einer Oberfläche verhindert, und/oder das Wachstum von Meeresorganismen auf einer Oberfläche verhindert und/oder die Entfernung von Meeresorganismen von einer Oberfläche fördert, und vorzugsweise in einer Menge präsent ist, die von 0,5 bis 80 Gewichtsprozent reicht, beispielsweise von 1 bis 70 Gewichtsprozent..

14. Ein Verfahren zum Schutz eines Objektes vor Bewuchs, umfassend die Beschichtung von mindestens einem Teil des besagten, dem Bewuchs ausgesetzten Objektes mit einer anwuchsverhindernden Beschichtungszusammensetzung gemäß einem der Ansprüche 1 bis 13.

15. Ein, mit der anwuchsverhindernden Beschichtungszusammensetzung gemäß einem der Ansprüche 1 bis 13 beschichtetes Objekt.

## Revendications

1. Composition de revêtement anti-salissures comprenant :
(A) un copolymère d'ester de silyle ;
(B) un carbodiimide de formule (II) : 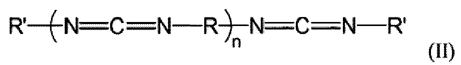 où :
R est un groupement arylène éventuellement substitué ;
chaque R' est un groupement aryle éventuellement
substitué indépendamment identique ou différent et n est un nombre entier de 0 à 500, de préférence de 0 à 50 ; et
(C) un agent biologiquement actif qui empêche le dépôt d'organismes marins sur une surface et/ou empêche la croissance d'organismes marins sur une surface et/ou encourage le délogement d'organismes marins d'une surface.

2. Composition de revêtement anti-salissures selon la revendication 1, dans laquelle ledit copolymère d'ester de silyle comprend au moins un monomère (A) de formule (I) : 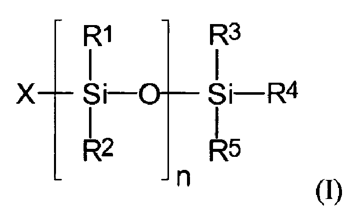 où :
R¹ et R² sont chacun indépendamment choisis parmi des groupements alkyle en C₁-C₄ linéaires ou ramifiés ;
R³, R⁴ et R⁵ sont choisis chacun indépendamment dans le groupe constitué des groupements alkyle en C₁-C₂₀, des groupements cycloalkyle en C₃-C₁₂, des groupements aryle en C₆-C₂₀ et des groupements -Osi(R⁶)₃ linéaires ou ramifiés ;
chaque R⁶ est un groupement alkyle en C₁-C₄ linéaire ou ramifié,
n est un nombre entier de 0 à 5 ;
X est un groupement éthyléniquement insaturé, de préférence acryloyloxy, un groupement méthacryloyloxy, un groupement (méthacryloyloxy)-alkylcarboxy, un groupement (acryloyloxy)alkyl-carboxy, un groupement maléinoyloxy, un groupement fumaroyloxy, un groupement itaconoyloxy ou un groupement citraconoyloxy.

3. Composition de revêtement anti-salissures selon l'une quelconque des revendications précédentes, dans laquelle les monomères d'ester de silyle sont des composés de formule (I) dans laquelle n=0.

4. Composition de revêtement anti-salissures selon les revendications 1 à 3, dans laquelle chaque R' est un groupement aryle en C₆-C₁₀ substitué par un ou plusieurs d'un halogène, d'un groupement alkyle ayant 1 à 8 atomes de carbone ou d'un groupement cycloalkyle en C₃-C₈.

5. Composition de revêtement anti-salissures selon les revendications 1 à 4, dans laquelle R est un groupement arylène en C₆-C₁₀ substitué par un ou plusieurs d'un halogène, d'un groupement alkyle ayant 1 à 8 atomes de carbone ou d'un groupement cycloalkyle en C₃-C₈.

6. Composition de revêtement anti-salissures selon l'une quelconque des revendications 1 à 5, dans laquelle certains ou la totalité des substituants sont des substituants ramifiés.

7. Composition de revêtement anti-salissures selon l'une quelconque des revendications 1 à 6, dans laquelle R et/ou l'un ou les deux R' porte (nt) deux substituants ou plus, par exemple deux substituants ramifiés.

8. Composition de revêtement anti-salissures selon l'une quelconque des revendications 1 à 7, dans laquelle R et/ou l'un ou les deux R' est ou sont un groupement phényle substitué.

9. Composition de revêtement anti-salissures selon l'une quelconque des revendications 1 à 8, dans laquelle R et/ou l'un ou les deux R' est ou sont ortho-substitués.

10. Composition de revêtement anti-salissures selon l'une quelconque des revendications précédentes, dans laquelle le carbodiimide est présent en quantité de 0,001 % en poids à 10 % en poids, de préférence de 0,2 % en poids à 1 % en poids.

11. Composition de revêtement anti-salissures selon l'une quelconque des revendications précédentes, dans laquelle le carbodiimide a une demi-vie de 10 heures ou plus, de préférence de 20 heures ou plus, mieux encore de 25 heures ou plus comme décrit dans les exemples.

12. Composition de revêtement anti-salissures selon l'une quelconque des revendications précédentes, comprenant en outre un agent déshydratant ou un dessiccant.

13. Composition de revêtement anti-salissures selon l'une quelconque des revendications précédentes, dans laquelle ledit agent anti-salissures est un composé qui empêche le dépôt d'organismes marins sur une surface et/ou empêche la croissance d'organismes marins sur une surface et/ou encourage le délogement d'organismes marins d'une surface, de préférence présent en quantité de 0,5 à 80 % en poids, notamment de 1 à 70 % en poids.

14. Procédé de protection d'un objet à l'égard de salissures, comprenant le revêtement d'au moins une partie dudit objet qui est sujet aux salissures avec une composition de revêtement anti-salissures selon l'une quelconque des revendications 1 à 13.

15. Objet revêtu de la composition de revêtement anti-salissures selon l'une quelconque des revendications 1 à 13.
